Europäisches Patentamt

European Patent Office

Office européen des brevets

(19)

(11) Numéro de publication: **0 349 395**

**A1**

(12) **DEMANDE DE BREVET EUROPEEN**

(21) Numéro de dépôt: **89401778.9**

(22) Date de dépôt: **23.06.89**

(51) Int. Cl.⁵: **C 08 K 3/38**
**C 08 J 5/24**

(30) Priorité: **30.06.88 FR 8808859**

(43) Date de publication de la demande:
**03.01.90 Bulletin 90/01**

(84) Etats contractants désignés:
**AT BE CH DE ES GB GR IT LI LU NL SE**

(71) Demandeur: **NORSOLOR S.A.**
**Tour Aurore - Cédex 5 18, place des Reflets**
**F-92080 Paris la Defense 2 (FR)**

(72) Inventeur: **Cousin, Michel**
**81, rue wattiez**
**F-62118 Loison s/Lenz (FR)**

**François, Pierre-Michel**
**Résidence les Fleurantines Rue Béranger**
**F-62400 Bethune (FR)**

**Michel-Dansac, François**
**3, allée Alfred de Musset**
**F-94200 Le Plessis Trevise (FR)**

(74) Mandataire: **Rieux, Michel**
**NORSOLOR Service Propriété Industrielle Tour Aurore**
**18, Place des Reflets Cedex no. 5**
**F-92080 Paris la Défense 2 (FR)**

(54) **Composition résineuses à base de résines phénoliques.**

(57) - Compositions de résine phénolique convenant pour la fabrication de mats préimprégnés. - Compositions selon lesquelles elles contiennent un additif constitué d'un borate alcalin ou alcalino-terreux ou de métaborate alcalin ou alcalino-terreux ou de tétraborate alcalin ou alcalino-terreux.
- Application à la fabrication de mats préimprégnés phénoliques stables ou stockage.

EP 0 349 395 A1

**Description**

## COMPOSITIONS RESINEUSES A BASE DE RESINES PHENOLIQUES :

La présente invention concerne des compositions résineuses à base de résines phénoliques, elle a plus particulièrement pour objet des compositions de résines phénoliques particulièrement adaptées pour la fabrication de "mats préimprégnés phénoliques".

Les préimprégnés sont des matériaux mixtes que l'on prépare à partir de résines thermodurcissables et de renforts et éventuellement de charges. Le renfort utilisé est à l'état de fibre telles que fibres cellulosiques ou fibre de verre en particulier rovings de fibres de verre, de non-tissé par exemple en polyester de haut poids moléculaire, en chlorure de polyvinyle, de mat de fibre de verre ou tissu par exemple en polyamide aromatique, en verre ou en amiante. Ces matériaux préimprégnés présentent l'avantage de pouvoir être moulés directement à la presse sans qu'il soit nécessaire de préparer au préalable un mélange constitué de résine, de catalyseurs, de charges et de pigments. Les préimprégnés peuvent être divisés en deux catégories : d'une part les préimprégnés sans fluage et d'autre part les préimprégnés dits "avec fluage". Les préimprégnés "sans fluage" sont généralement constitués uniquement par des renforts de fibres de verre imprégnés d'une résine convenable conduite à un stade approprié de polymérisation partielle, stade dit "B". A ce stade là, les résines ne poissent pratiquement plus mais sont encore solubles et fusibles. Un tel matériau mixte mis sous presse chauffée permet un déplacement de la résine entre les fibres et conduit à une distribution uniforme du verre et de la résine. Après fermeture du moule, la résine est complétement durcie. On fabrique les préimprégnés sans fluage à partir de résines époxy,de résines formo-phénoliques et aussi de résines polyesters à base de diallyl phtalate. De tels matériaux permettent des applications particulièrement limitées car ils présentent le plus souvent l'inconvénient de se désolidariser lors de la mise en oeuvre : ils sont par exemple utilisés pour la fabrication de circuits imprimés.

Les préimprégnés "à fluage" connus appelés les plus souvent "mats préimprégnés" sont jusqu'à présent préparés le plus souvent uniquement à partir d'uen seule catégorie de résine à savoir les résines polyesters. Suivant la technique de fabrication mise en oeuvre, on dis tingue en particulier deux variétés de "mats préimprégnés".

Les préimprégnés S M C (en anglais sheet molding compound) sont des matériaux mixtes constitués d'une nappe de fils de verre coupés, préimprégnée de résine chargée, pigmentée et catalysée. Ils se présentent entre deux pellicules filmogènes (par exemple polyéthylène) ce qui permet une manipulation aisée. Ils sont ensuite mis en oeuvre par moulage par compression.

Les composés de moulage dans la masse (en anglais bulk moulding compound : BMC) sont des mélanges constitués de résine thermodurcissable, de charge et de fils de verre coupés : ils se présentent en vrac ou en boudin prêt à l'emploi.

Le mat préimpregné ainsi obtenu présente après mûrissement à la chaleur une consistance voisine de celle du cuir ou d'une toile cirée. Après stockage dans une chambre de mûrissement le mat préimprégnés ainsi obtenu peut être stocké pendant environ trois mois, période durant laquelle il peut être utilisé par moulage à chaud et sous pression.

La difficulté majeure qui doit être surmontée pour fabriquer ces mats préimprégnés à base de résines thermodurcissables polyesters en particulier est de disposer de résine qui soit assez fluide pour pouvoir imprégner le tapis de fils de verre coupés mais dont l'évolution de la viscosité durant les premières 48 heures (période au bout de laquelle la viscosité ne doit pratiquement plus varier à température ambiante)soit assez rapide afin de pouvoir obtenir un mat préimprégné qui présente la consistance désirée et qui doit être voisine de celle du cuir ou de celle d'une toile cirée comme indiqué ci-dessus. On voit donc qu'il existe pratiquement deux problèmes antagonistes à résoudre. Pour résoudre de tels problèmes, il est connu d'ajouter à la résine polyester un épaississant choisi parmi des oxydes alcalino-terreux tel que l'oxyde de magnésium. L'addition d'un tel composé à la résine polyester permet d'obtenir une résine présentant une viscosité souhaitée mais aussi une stabilité suffisante qui permet à la résine de ne pas épaissir trop rapidement sous peine d'obtenir une impégnation médiocre des tapis de fils de verre coupés.

Il est connu par la demande française 84.12277 du 3 août 1984 déposée par la demanderesse de fabriquer des compositions pâteuses convenant pour la fabrication des mats préimprégnés phénoliques constitué de résol, de charge, de pigments et d'agents durcisseurs et d'un additif constitué d'au moins de 20 % en poids par rapport au poids total de l'additif d'un métaborate alcalino-terreux.

Il est aussi connu par la demande française 86/08127 déposée par la demanderesse de fabriquer des compositions à base de résines phénoliques convenant pour la fabrication de mats préimprégnés phénoliques par la mise en oeuvre dans le mélange de résine phénoliques d'un additif constitué d'un dérivé organique choisi parmi la triéthanolamine borate ou d'un mélange constituté d'une amine et d'un dérivé boré oxygéné minéral choisi parmi l'acide borique ou l'anhydride borique.

En réalité ces compositions concernent des additifs à base de produits borés élaborés chimiquement, en particulier pour ce qui concerne la dernière demande relative à la triéthanolamine.

La présente invention concerne des compositions de résine phénolique convenant pour la fabrication de mats préimprégnés phénoliques selon lesquels les compositions utilisées pour l'imprégnation des mats de fils sont constitués de résines formo-phénoliques du type résol, de charges, de pigments et, d'agents durcisseurs caractérisées en ce que ces compositions contiennent un additif constitué d'un borate naturel alcalin ou alcalino-terreux, ou de métaborate alcalin ou alcalino-terreux ou de tétraborate alcalin ou alcalino-terreux.

On a en effet trouvé que la mise en oeuvre de tels additifs permet d'obtenir une composition résineuse phénolique dont la viscosité évolue de façon adaptée pour fabriquer des préimprégnés phénoliques. On a aussi trouvé que les préimprégnés phénoliques fabriqués à partir de ces compositions conduisaient à des produits finis présentant des propriétés au feu améliorées. On a aussi trouvé que la mise en oeuvre d'un tel additif dans les résines phénoliques nécessitait des quantités moindres de catalyseur acide lors du durcissement de la résine phénolique.

De façon surprenante on a trouvé que les compositions de l'invention permettaient d'obtenir des compositions pâteuses convenant pour la fabrication de mats préimprégnés phénoliques. On a aussi par ailleurs trouvé que les oxydes alcalino-terreux qui sont utilisés dans les polyesters comme agents épaississants conduisaient dans les résines phénoliques à des compositions non homogènes demandant des temps de moulages rédhibitoires. On a aussi trouvé que l'acide borique seul qui rentre dans la formulation de compositions phénoliques connues, conduisaient à des compositions qui épaississaient rapidement ce qui ne permet pas son emploi pour fabriquer des mats préimprégnés phénoliques.

Selon l'invention les compositions résineuses à base de résines phénoliques contiennent au plus 60 % en poids par rapport au poids de la solution de résine phénolique mise en oeuvre et de préférence entre 5 et 40 % en poids de l'additif constitué d'un borate naturel alcalin ou alcalino-terreux ou de métaborate alcalin ou alcalino-terreux ou de tétraborate alcalin ou alcalino-terreux. En dessous de 5 % on n'observe pratiquement aucune incidence sur la viscosité ; au delà de 60 % en poids, il n'est plus possible de maîtriser la viscosité de la composition ce qui la rend inadaptée pour la fabrication de mats préimprégnés.

Les compositions objet de l'invention sont constituées de résine phénolique et d'un additif constitué d'un borate naturel ou alcalino-terreux ou de métaborate alcalin ou alcalino-terreux ou de tétraborate alcalin ou alcalino-terreux. Les borates qui conviennent pour la mise en oeuvre de l'invention sont choisis parmi des produits que l'on trouve dans la nature, en particulier le borate de calcium. On les trouve par exemple décrits dans l'Encyclopédie KIEK-OTHMER volume 4 pages 101 et 102 (3 ème Ed.).

Selon l'invention pour la mise en oeuvre de tétraborate alcalin ou alcalino-terreux il est aussi possible de le fabriquer in situ par addition d'acide borique à un métaborate alcalin ou alcalino-terreux, l'acide borique étant utilisé en quantité telle qu'il se transforme en tétraborate alcalin ou alcalino-terreux. Ces dérivés borés sont décrits dans le même volume 4 de l'Encyclopédie du KIRK-OTHMER pages 98 et 99 (3 ème Ed.).

Les compositions de résines objet de l'invention sont préparées en ajoutant l'additif à la résine phénolique.

De façon connue, le durcissement des résines phénoliques est réalisé à l'aide de solutions de catalyseurs constituées de solvant et d'un acide : comme acide on peut citer en particulier l'acide paratoluène sulfonique, l'acide orthotoluène sulfonique, l'acide benzène sulfonique et l'acide xylène sulfonique. Comme solvants organiques, on entend les composés à fonction alcool : méthanol, éthanol, propanol, isopropanol ainsi que les polyols comme le glycérol, le dipropylène-glycol et le triéthylène-glycol.

Les catalyseurs latents connus conviennent plus particulièrement pour la fabrication des compositions conformes à l'invention. Par catalyseur latents, on entend des catalyseurs qui sont pratiquement inactifs à basse température, mais qui deviennent catalytiquement actifs à température élevée, nécessaire à la polycondensation de la résine. Comme catalyseur latents, on peut citer par exemple les solutions constituées d'un ester alcoylé, d'un acide toluène sulfonique, d'une solvant organique et d'un acide toluène sulfonique ou d'acide sulfurique concentré. Les quantités de durcisseurs utilisées sont celles employées classiquement pour le durcissement de résols : ces quantités sont comprises entre 5 et 50 % en poids par rapport au poids de la solution de résol et de préférence entre 10 et 40 %.

Les résols utilisés pour la fabrication des compositions conformes à l'invention sont des résols connus préparés par exemple par condensation de formol sur le phénol en présence d'un catalyseur alcalin. Ils présentent un rapport molaire F/P compris entre 1,2 et 2,5 et contiennent éventuellement des additifs tels que plastifiants, tensioactifs, charges telle que silice, kaolin, hydroxyde d'aluminium.

Les compositions de résines phénoliques objet de l'invention conviennent particulièrement pour la fabrication de mats préimprégnés phénoliques. Pour la fabrication des préimprégnés, on utilise de façon connue des renforts constitués des fils coupés de fibres de verre, des rovings de fils de verre coupés, des fibres cellulosiques ou des fibres de carbone. La quantité de fibres utilisées est telle que le mat préimprégné fini en contient au plus 70 % en poids par rapport au poids total du matériau fini.

Les compositions de résines phénoliques objet de l'invention, permettent de fabriquer des mats préimprégnés à très bon fluage, elles permettent également d'obtenir des mats préimprégnés phénoliques qui peuvent être stockés pendant au moins 2 mois avant moulage à température ambiante. Par rapport aux mats préimprégnés connus fabriqués à partir de résines polyester insaturé, les mats préimprégnés phénoliques ont l'avantage de présenter de meilleures réaction au feu, et une meilleure résistance à la combustion, ce qui élargit leurs champs d'application. De plus,le matériau fini à une meilleure tenue thermique.

Les mats préimprégnés obtenus à partir des compositions de résine objet de l'invention peuvent être mis en oeuvre après stockage, de façon connue, en les soumettant par exemple dans des presses à des pressions comprises entre 40 et 140 bars pendant 20 à 200 secondes par millimètre d'épaisseur à une température comprise entre 110 et 160°C.

Les exemples suivants illustrent la présente invention. Toutes les quantités sont exprimées en parties en poids.

Exemple 1

On met en oeuvre 100 parties d'une résine phénolique qui présente les caractéristiques suivantes :

- Viscosité (Pa. s)  :  21
- Extrait sec (%)  :  83
- PH  :  6,85

On réalise différents essais en ajoutant à la résine du borate naturel de calcium, du métaborate de calcium seul, et le couple métaborate de calcium + acide borique de façon à fabriquer le tétraborate de calcium in situ. Le tableau 1 résume les quantités de réactifs mises en oeuvre et l'évolution de la viscosité.

TABLEAU 1

| N° ESSAI | 1 | 2 | 3 |
|---|---|---|---|
| ADDITIFS UTILISES | Borate de calcium | Métaborate de calcium | Métaborate de calcium |
| QUANTITE MISE EN OEUVRE | 10,17 | 8 | 8 |
| ACIDE BORIQUE | 0 | 6,11 | 0 |
| FORME ADDITIF MIS OEUVRE | Borate de calcium | Tétraborate de calcium | Métaborate de calcium |
| EVOLUTION VISCOSITE (Pa. S) | | | |
| INITIAL | 45 | 120 | 45 |
| AU BOUT DE 5 JOURS | 9 000 | 15 000 | 9 000 |
| APRES 10 JOURS | 200 000 | 200 000 | 180 000 |
| APRES 15 JOURS | 210 000 | 210 000 | 180 000 |

Exemple 2 :

On met en oeuvre 100 parties de la résine utilisée dans l'exemple 1 du borate de calcium et on ajoute un catalyseur de durcissement constitué d'un mélange de méthanol et d'acide paratoluène-sulfonique : ce catalyseur est fabriqué à partir d'une mole de méthanol et d'une mole d'acide paratoluène-sulfonique. Le tableau 2 résume les quantités de réactifs utilisés et les résultats obtenus.

TABLEAU 2

| N° ESSAI | 1 |
| --- | --- |
| ADDITIFS UTILISE | Borate de calcium |
| QUANTITE MISE EN OEUVRE | 8 |
| QUANTITE CATALYSEUR | 13 |
| EVOLUTION VISCOSITE (Pa. S) | |
| INITIAL | 16 |
| APRES 5 JOURS | |
| APRES 10 JOURS | |
| APRES 15 JOURS | 140 000 |
| APRES 20 JOURS | 190 000 |
| APRES 25 JOURS | 230 000 |
| APRES 30 JOURS | 235 000 |

**Exemple 3 :**

La résine phénolique mise en oeuvre dans l'exemple 1 est additionnée de différentes quantités de borates de calcium. Le tableau 3 résume les résultats obtenus.

TABLEAU 3

| N° ESSAI | 1 | 2 | 3 |
| --- | --- | --- | --- |
| ADDITIF UTILISE | Borate de calcium | Borate de calcium | Borate de calcium |
| QUANTITE MISE EN OEUVRE | 6 | 4 | 2 |
| EVOLUTION VISCOSITE (Pa. S) | | | |
| INITIAL | 30 | 30 | 30 |
| APRES 5 JOURS | | 320 | 60 |
| APRES 10 JOURS | 140 000 | 1 200 | 94 |
| APRES 15 JOURS | 280 000 | 5 000 | 95 |
| APRES 20 JOURS | 320 000 | 11 000 | 105 |
| APRES 25 JOURS | 330 000 | 26 000 | 120 |
| APRES 30 JOURS | 340 000 | 60 000 | 130 |

**Exemple 4 :**

On met en oeuvre 100 parties de la résine de l'exemple 1, avec divers additifs. le tableau 4 résume les résultats obtenus.

TABLEAU 4

| N° ESSAI | 1 | 2 | 3 | 4 |
|---|---|---|---|---|
| ADDITIF UTILISE | Borate de calcium | Acide borique | Mg O | Ba O |
| QUANTITE MISE EN OEUVRE | 10,3 | | 2,015 | 7,66 |
| ACIDE BORIQUE | 0 | 4,78 | 9,27 | 9,27 |
| EVOLUTION VISCOSE (Pa. S) | | | difficulté de mesurer la viscosité par suite de formation de mousse, produit sans intérêt | difficulté de mesurer la viscosité par suite de formation de mousse, produit sans intérêt |
| INITIAL<br><br>APRES 5 JOURS<br>APRES 10 JOURS<br>APRES 15 JOURS<br>APRES 20 JOURS | 45<br><br>9 000<br>200 000<br>200 000<br>210 000 | 20<br>500 (aprés 2 jours)<br>10 000<br>gélification | 50<br><br>9 500<br>200 000<br>200 000<br>210 000 | 40<br><br>8 000<br>180 000<br>180 000<br>200 000 |

**Revendications**

1 - Compositions de résine phénolique convenant pour la fabrication de mats préimprégnés phénoliques selon lesquelles les compositions utilisées pour l'imprégnation des mats de fils sont constituées de résines formo-phénoliques du type résol, de charges, de pigments, et d'agents durcisseurs caractérisées en ce que ces compositions contiennent un additif constitué d'un borate naturel alcalin ou alcalino-terreux, ou de métaborate alcalin ou alcalino-terreux ou de tétraborate alcalin ou alcalino-terreux.

2 - Compositions selon 1 caractérisée en ce qu'elles contiennent au plus 60 % en poids par rapport au poids de la solution de résine phénolique, de l'additif.

3 - Compositions selon 1 caractérisées en ce qu'elles contiennent de 5 à 40 % en poids, de l'additif.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,Y | EP-A-0 176 378  (SOCIETE CHIMIQUE DES CHARBONNAGES) <br> * Résumé * <br> --- | 1 | C 08 K   3/38 <br> C 08 J   5/24 |
| D,Y | EP-A-0 249 517  (SOCIETE CHIMIQUE DES CHARBONNAGES) <br> * Résumé * <br> --- | 1 | |
| Y | EP-A-0 220 105  (SOCIETE CHIMIQUE DES CHARBONNAGES) <br> * Résumé * <br> --- | 1 | |
| Y | EP-A-0 154 874  (E. RÜHL et al.) <br> * Résumé * <br> --- | 1 | |
| Y | EP-A-0 004 634  (BASF) <br> * Résumé; page 4, lignes 1-18 * <br> ----- | 1 | |

**DOMAINES TECHNIQUES RECHERCHES (Int. Cl.5)**

C 08 K
C 08 J

Le présent rapport a été établi pour toutes les revendications

| Lieu de la recherche | Date d'achèvement de la recherche | Examinateur |
|---|---|---|
| LA HAYE | 20-09-1989 | STIENON P.M.E. |